# FASCICULE DE BREVET EUROPEEN

(11) **EP 1 904 316 B1**
(45) Date de publication et mention de la délivrance du brevet: **23.05.2012**
(21) Numéro de dépôt: 06779032.9
(22) Date de dépôt: 10.07.2006
(51) Int. Cl.: B60B 35/08, B60G 21/05

(54) **ESSIEU SOUPLE DE VEHICULE AUTOMOBILE, COMPRENANT UNE TRAVERSE A SECTION OUVERTE DONT LES FLANCS PRESENTENT DES CHANTS NON RECTILIGNES, TRAVERSE ET VEHICULE CORRESPONDANT**
FLEXIBLE KRAFTFAHRZEUGACHSE MIT EINER QUERVERSTREBUNG MIT OFFENEM QUERSCHNITT, DEREN FLANKEN GERADLINIGE RÄNDER ENTHALTEN, QUERVERSTREBUNG UND ENTSPRECHENDES FAHRZEUG
MOTOR VEHICLE FLEXIBLE AXLE, COMPRISING A CROSS BRACING WITH OPEN CROSS-SECTION WHEREOF THE FLANKS INCLUDE RECTILINEAR EDGES, CROSS BRACING AND CORRESPONDING MOTOR VEHICLE

(30) Priorité: 13.07.2005 FR 0507566
(43) Date de publication de la demande: 02.04.2008
(73) Titulaire: Auto Chassis International SNC, 72086 Le Mans Cédex 9 (FR)
(72) Inventeur: DE POMPIGNAN, Alexis, F-72000 Le Mans (FR)
(74) Mandataire: Rougemont, Bernard
(86) Numéro de dépôt international: PCT/FR2006/050693
(87) Numéro de publication internationale: WO 2007/007002

(56) Documents cités:
- EP-A- 1 036 678
- EP-A- 1 256 468
- EP-A- 1 314 587
- US-A- 6 059 314
- US-A- 6 152 468
- PATENT ABSTRACTS OF JAPAN vol. 007, no. 141 (M-223), 21 juin 1983 (1983-06-21) & JP 58 053504 A (TOYO KOGYO KK), 30 mars 1983 (1983-03-30)

## Description

Le domaine de l'invention est celui des véhicules automobiles. Plus précisément, l'invention concerne les essieux souples pour les véhicules automobiles.

On rappelle qu'on désigne généralement par essieu souple un essieu conçu de façon à former un élément torsible entre deux roues.

Classiquement, un essieu souple comprend deux bras longitudinaux portant chacun un support de montage de roue et reliés par un élément de liaison transversale appelé traverse ou profil.

Au cours de la conception d'un essieu, deux grandeurs sont, entre autres, considérées pour apprécier la qualité de l'essieu: la flexion et la torsion.

Le principe des essieux souples permet de concilier une forte raideur en flexion et une relative souplesse en torsion. En général, c'est par la géométrie de la section de la traverse, via ses inerties de flexion et de torsion, qu'est obtenu le compromis souhaité entre raideur en flexion et souplesse (relative) de torsion.

Les sections choisies pour réaliser des traverses en acier (ou autre matériau isotrope) ont souvent des formes de « V », de « U », de « L », car ces types de géométrie présentent un rapport intéressant entre inertie de flexion et inertie de torsion.

Les dernières années ont vu un déploiement important de la technique des essieux souples sur les segments de gamme inférieure et moyenne de la construction automobile, grâce à de nombreux avantages, parmi lesquels un excellent compromis prestations/architecture, et une mise en oeuvre économique utilisant principalement des assemblages de type mécano soudé.

Ces avantages conduisent les concepteurs de liaison au sol à continuellement pousser la technique dans ses derniers retranchements. Les essieux souples sont en effet entachés d'un certain nombre de limitations parmi lesquelles un compromis délicat entre raideurs longitudinale et transversale et une durabilité conditionnée par la tenue en endurance de chacun de leurs composants, soumis à d'importantes déformations élastiques.

L'élément de liaison, ou traverse, fait partie des composants les plus délicats à mettre au point, notamment sur le plan de l'endurance. Outre la tenue du corps de traverse, les zones d'accostage sur les bras, généralement soudées, sont particulièrement sollicitées et requièrent toute l'attention des développeurs sous peine de rupture prématurée de la liaison.

On connaît différents types de traverses et de montage de celle-ci entre les bras longitudinaux de l'essieu.

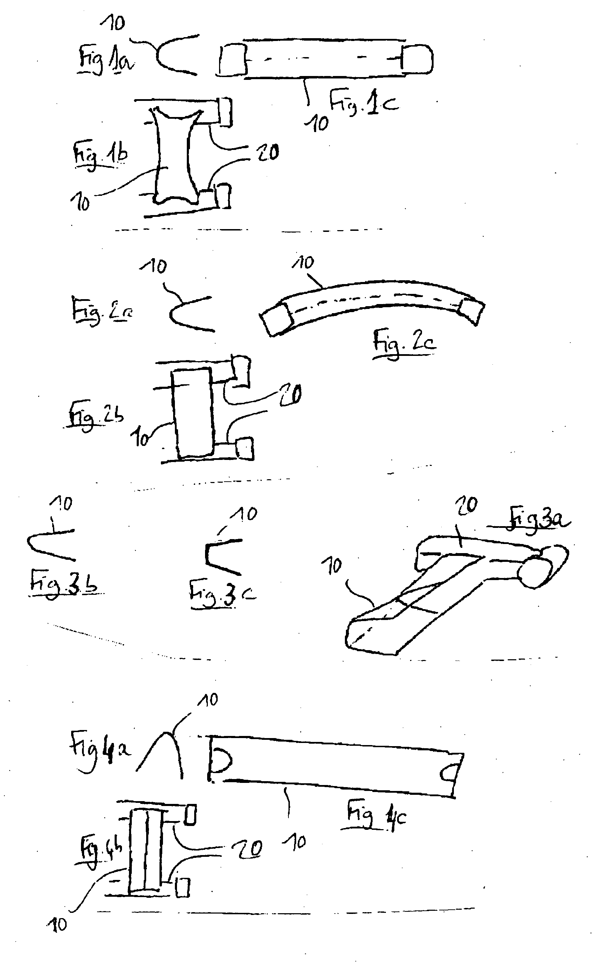

Selon une première technique connue, illustrée par les figures 1a, 1b et 1c, la traverse 10 présente une section en forme de V sur toute la longueur de la traverse. En outre, la hauteur des flancs de la traverse augmente aux extrémités de la traverse de façon à augmenter l'emprise de la traverse sur les bras 20.

Selon une deuxième technique illustrée par les figures 2a, 2b et 2c, la traverse 10 est cintrée dans le plan YZ (et est généralement appelée de ce fait traverse « bananée »). Une telle traverse, dont la section est ouverte vers l'arrière une fois montée, présente des découpes à ses extrémités pour accoster les bras 20. Ces derniers sont généralement carrés dans le cas de cette technique, ce qui implique des surcoûts non négligeables du fait du recours nécessaire à certaines opérations de cintrage, d'écrasement...

Selon une troisième technique illustrée par les figures 3a, 3b et 3c, la traverse 10 est cintrée dans le plan YZ et présente de plus une section évolutive, qui part d'une forme en V dans la zone centrale de la traverse et qui aboutit à une forme trapézoïdale aux extrémités de la traverse.

Dans ces cas de figure, on constate, à plus ou moins brève échéance en fonction des conditions d'utilisation du véhicule, des phénomènes de dégradation des liaisons par soudure entre la traverse et les bras longitudinaux.

Or, l'analyse de ces phénomènes conduit à constater que les cordons de soudure à l'interface traverse/bras travaillent en « pelage », ce type de sollicitation correspondant à une faiblesse connue des cordons qui tient notamment à l'orientation de leur structure métallographique en cours de refroidissement.

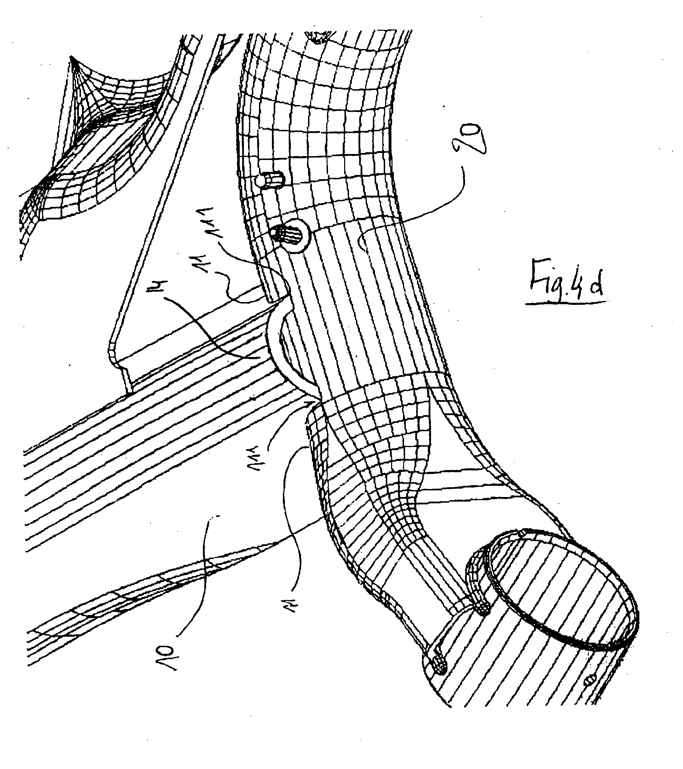

Une autre technique d'essieu a été proposée par l'art antérieur, celle-ci est illustrée par les figures 4a, 4b, 4c et 4d.

Selon cette technique, la traverse 1 une fois montée présente une section ouverte vers le bas, ce qui tend à rehausser le centre de torsion de l'essieu et lui confère un meilleur comportement élasto-cinématique.

Tel que cela apparaît sur les figures 4a, 4b, 4c et 4d, la traverse 10 est disposée sensiblement perpendiculairement au bras longitudinal 20, l'extrémité de la traverse 1 étant prévue pour venir épouser le bras 20.

Pour ce faire, la traverse présente latéralement deux portions d'accostage 11 dont la forme correspond à celle (en général cylindrique) du bras. Ces portions d'accostage 11 se prolongent classiquement de façon que la traverse viennent couvrir le dessus des bras 20.

La figure 4d fait clairement apparaître qu'une portion de liaison 14 relie les deux portions d'accostage de la traverse, en formant avec chacune de celles-ci un angle 111.

Avec ce type de solution, on constate régulièrement que les soudures sont fortement sollicitées en fin de cordon, et plus précisément au niveau des angles 111 de la traverse 1. Ceci peut se traduire par l'apparition de fissures sur la soudure, ces fissures coupant à terme le cordon de soudure en deux. Dans certains cas, ces fissures vont jusqu'à se répandre dans le bras d'essieu.

On comprend bien évidemment que ceci peut entraîner des détériorations importantes de l'essieu, ceci pouvant avoir des répercussions sur le niveau de sécurité offert par le véhicule équipé de l'essieu en question.

En tout état de cause, il est souhaitable de supprimer, ou à tout le moins de limiter les détériorations mentionnées précédemment.

De plus, quand des sollicitations importantes s'exercent sur les zones d'accostage, notamment du fait des flexions successives de la traverse, les angles 11 tendent à poinçonner la paroi du bras longitudinal. En d'autres termes, ces angles 111 sous l'effet des vibrations et secousses transmises par le véhicule, connaissent des micro-déplacements dirigés vers l'intérieur du bras et se traduisant par des attaques (à la façon d'un poinçon) de la paroi du bras.

Ces attaques répétées engendrent à terme une fissuration de la paroi du bras et/ou un pelage du cordon de soudure.

Il est également connu, par le document JP-58 053504, un essieu conçu pour éviter la concentration de contraintes dans la partie centrale de la traverse, cette dernière présentant une section rectangulaire dont la section décroît en direction des extrémités de la traverse permettant de déporter les contraintes de la zone centrale.

Pour remédier à cette situation, une solution consisterait à augmenter l'épaisseur de la paroi des bras longitudinaux, ceci afin d'en augmenter la résistance.

Toutefois, ceci aurait pour conséquence d'augmenter le poids des bras longitudinaux.

Pour limiter ce phénomène de poinçonnage, une technique a été proposée par la présente Demanderesse pour introduire une souplesse relative aux extrémités de la traverse. Ceci est obtenu en réalisant, par exemple à chaque extrémité de la traverse une échancrure. Toutefois, cette technique implique l'exécution d'une étape d'usinage ou de découpe de la traverse préalablement à l'emboutissage de la traverse, ce qui ajoute une étape à la gamme de fabrication de l'essieu et tend à augmenter son coût.

L'invention a notamment pour objectif de pallier les inconvénients de l'art antérieur.

Plus précisément, l'invention a pour objectif de proposer une technique pour assurer de façon plus fiable et plus durable la liaison entre la traverse et les bras longitudinaux d'un essieu souple, comparée aux solutions de l'art antérieur.

En ce sens, l'invention a en particulier pour objectif de fournir un tel essieu qui supprime, ou à tout le moins qui limite les risques de fissuration des bras provoqués par la traverse, ainsi que les phénomènes de pelage des cordons de soudure dans les zones d'accostage de la traverse sur les bras.

Un autre objectif de l'invention est de fournir un tel essieu qui soit simple de conception et qui puisse être assemblé plus aisément et/ou plus rapidement qu'avec les solutions classiques de l'art antérieur.

L'invention a aussi pour objectif de fournir un tel essieu qui soit peu coûteux et facile à mettre en oeuvre.

Ces objectifs, ainsi que d'autres qui apparaîtront par la suite, sont atteints grâce à l'invention qui a pour objet un essieu souple de véhicule automobile, comprenant deux bras longitudinaux reliés par une traverse à section ouverte dont les flancs présentent chacun un chant s'étendant entre des zones d'accostage aux extrémités de ladite traverse, caractérisé en ce que lesdits chants présentent une forme non rectiligne favorisant leur mise en tension lors d'une torsion de ladite traverse, ladite mise en tension étant de nature à soulager lesdites zones d'accostage des contraintes dues à ladite torsion.

De cette façon, les chants présentent une longueur supérieure à la distance qui sépare les deux bras longitudinaux.

Cet « excès » de longueur introduit une souplesse relative au niveau des chants. En d'autres termes, les chants étant plus longs que nécessaire sont, en dehors d'une phase de sollicitations, dans un étant « détendu », la longueur en « excès » permettant avec un minimum de résistance de tendre les chants lors d'une torsion de l'essieu.

La résistance à la torsion étant réduite au niveau des chants, on favorise une dissipation des contraintes au niveau des chants et, par conséquent, au niveau des flancs de la traverse, ce qui tend à limiter considérablement les contraintes s'exerçant dans les zones d'accostage de la traverse aux bras longitudinaux.

On limite ainsi les risques de dégradation de la liaison tels que ceux mentionnés précédemment en référence à l'art antérieur, ce qui se traduit par une augmentation de l'endurance de l'essieu (la durée des liaisons au niveau des accostages étant à priori sensiblement prolongée).

En outre, un tel résultat est obtenu tout en conservant les prestations élasto-cinématique de l'essieu, comme cela va apparaître plus clairement par la suite.

Selon une solution préférée, lesdits chants présentent entre eux, à partir d'une zone sensiblement centrale de ladite traverse, un écartement progressif en direction desdites zone d'accostage.

Selon une solution avantageuse, ledit écartement progressif est croissant à partir de ladite zone centrale en direction desdites zones d'accostage.

Il est toutefois concevable, selon un autre mode de réalisation envisageable, que l'écartement soit décroissant à partir de la zone centrale de la traverse, procurant à celle-ci, vue de dessous, une allure bombée. Un tel mode de réalisation tendrait cependant à augmenter l'encombrement de la traverse pour conserver une emprise suffisante de la traverse sur les bras au niveau de la zone d'accostage.

Selon un premier mode de réalisation préféré, chacun desdits chants présente une forme galbée dont le rayon de courbure croit de ladite partie centrale en direction desdites zones d'accostage.

Selon un deuxième mode de réalisation, chacun desdits chants présente une forme en arc-de-cercle.

Préférentiellement, ladite traverse est solidarisée auxdits bras de façon à présenter ladite section ouverte vers le bas.

Comme mentionné précédemment, une telle architecture permet de rehausser le centre de torsion de l'essieu, ce qui peut être une demande de certains cahiers des charges des constructeurs.

Selon un mode de réalisation préférentiel, ladite traverse présente, au moins sur une partie de sa longueur, un plat sensiblement horizontal reliant lesdits flancs.

Dans ce cas, ladite traverse présente préférentiellement, une section en forme de V qui évolue de façon que ladite traverse présente à chacune de ses extrémités une section essentiellement trapézoïdale.

Ainsi, on conserve une souplesse relative en torsion, tout en permettant un élargissement de la traverse au niveau des zones d'accostage en vue d'étendre la liaison entre la traverse et les bras de l'essieu.

On note que les branches de la section en V peuvent être reliées par un plat de longueur notablement réduite par rapport au plat de la section trapézoïdale des extrémités.

Selon une solution avantageuse, ledit plat se prolonge à chacune desdites extrémités de ladite traverse de façon à présenter une portion de solidarisation avec lesdits bras longitudinaux.

Dans ce cas, ledit plat est préférentiellement soudé à chacune desdites extrémités de ladite traverse de façon à présenter une portion de solidarisation avec lesdits bras longitudinaux.

On obtient ainsi la possibilité de solidariser la traverse aux bras par une longueur de soudure supplémentaire par rapport à l'art antérieur, ce qui améliore l'endurance de l'essieu.

Selon une variante envisageable, il comprend au moins une pièce d'ajustement en raideur rapportée entre lesdits flancs, au voisinage de chacune des extrémités de ladite traverse.

Dans ce cas, lesdits chants présentent préférentiellement au voisinage de chacune desdites extrémités de ladite traverse une portion sensiblement droite, lesdites pièces d'ajustement en raideur étant rapportées entre lesdits flancs au niveau desdites portions sensiblement droites desdits chants.

On obtient ainsi une zone de solidarisation fiable (les flancs étant planaires ou quasiment dans cette zone) pour assurer la solidarisation des éléments d'ajustement à la traverse.

L'invention concerne également une traverse d'essieu souple de véhicule automobile, destinée à relier deux bras longitudinaux, ladite traverse présentant une section ouverte dont les flancs présentent chacun un chant s'étendant entre des zones d'accostage aux extrémités de ladite traverse, caractérisée en ce que lesdits chants présentent une forme non rectiligne favorisant leur mise en tension lors d'une torsion de ladite traverse, ladite mise en tension étant de nature à soulager lesdites zones d'accostage des contraintes dues à ladite torsion. '

L'invention concerne aussi un véhicule automobile équipé d'un essieu souple comprenant deux bras longitudinaux reliés par une traverse à section ouverte dont les flancs présentent chacun un chant s'étendant entre des zones d'accostage aux extrémités de ladite traverse, caractérisé en ce que lesdits chants présentent une forme non rectiligne favorisant leur mise en tension lors d'une torsion de ladite traverse, ladite mise en tension étant de nature à soulager lesdites zones d'accostage des contraintes dues à ladite torsion.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- les figures 1a, 1b et 1c sont des vues d'un premier mode de réalisation d'un essieu souple selon l'art antérieur ;
- les figures 2a, 2b et 2c sont des vues d'un deuxième mode de réalisation d'un essieu souple selon l'art antérieur ;
- les figures 3a, 3b et 3c sont des vues d'un troisième mode de réalisation d'un essieu souple selon l'art antérieur ;
- les figures 4a, 4b, 4c et 4d sont des vues d'un quatrième mode de réalisation d'un essieu souple selon l'art antérieur ;
- la figure 5 est une vue schématique de dessous d'une traverse d'essieu selon l'invention ;
- la figure 6 est une vue schématique en perspective d'une traverse d'essieu selon l'invention ;
- les figures 7a et 7b sont chacune une vue de section d'une traverse d'essieu selon l'invention, respectivement dans une zone centrale et dans une zone d'extrémité de la traverse ;
- la figure 8 est une autre vue en perspective d'une traverse d'essieu selon l'invention ;
- la figure 9 est une vue partielle d'un essieu selon l'invention, montrant un accostage entre la traverse et un bras longitudinal ;
- la figure 10 est une vue partielle d'un essieu selon l'invention, montrant un gousset rapporté entre la traverse et un bras longitudinal.

Tel que mentionné précédemment, le principe de l'invention réside dans le fait de prévoir une forme de chants pour les flancs de la traverse qui permette, lors d'une torsion de la traverse, de dissiper une partie des contraintes de torsion au niveau des chants en favorisant la mise en tension de ceux-ci, cette dissipation visant a limiter les contraintes s'exerçant au niveau de la liaison traverse-bras.

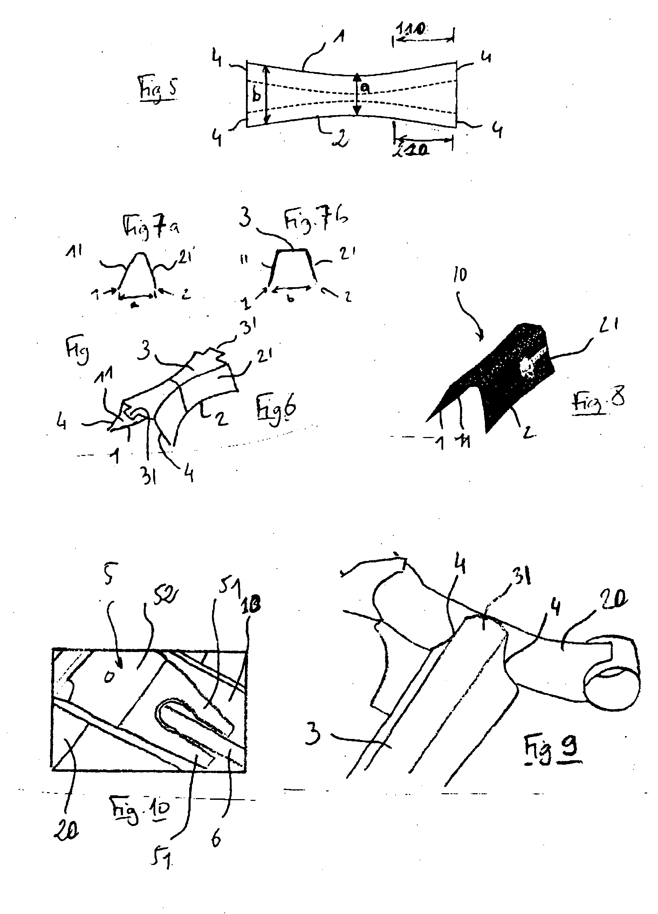

Un mode de réalisation préférentiel de l'invention est illustré par les figures 5 et 8 qui montre une traverse d'essieu selon l'invention.

Tel que cela apparaît, les chants 1, 2 des flancs 11, 21 de la traverse 10 présentent une forme non rectiligne de telle sorte que leur longueur soit supérieure à la distance qui sépare les deux bras longitudinaux que relie la traverse.

Selon le présent mode de réalisation, les flancs 11, 21 présentent un galbe apparaissant clairement sur les figures 6 et 8 (et étant volontairement accentué sur la figure 6 à des fins de clarté), ce galbe se traduisant au niveau des chants 1, 2 par une courbure.

Une telle courbure forme un excès de longueur susceptible d'être mis à contribution lors d'une tension de la traverse de telle sorte que, lors d'une mise en dévers du véhicule (qui tend à augmenter la distance entre les deux zones d'accostage de la traverse sur les bras), les chants se tendent en ayant tendance à prendre une forme droite (ou moins courbée).

Ainsi, on évite de « tirer »sur les extrémités de la traverse lors d'un dévers du véhicule (ce qui est le phénomène constaté lorsque les chants ont une longueur sensiblement égale à la distance qui sépare ces deux bras longitudinaux), réduisant ainsi les contraintes s'exerçant dans les zones d'accostage 4 de la traverse.

Tel qu'illustré par la figure 5, les chants 1, 2 présentent des courbures s'étendant l'une par rapport à l'autre de telle sorte que l'écartement a entre les chants en zone centrale soit inférieur à l'écartement b entre les chants au voisinage des zones d'accostage 4.

Plus précisément, l'écartement entre chants croît progressivement de la partie centrale de la traverse en direction des zones d'accostage.

Selon le mode de réalisation illustré par la figure 5, la courbure des chants 1, 2 présente un rayon de courbure qui croît progressivement de la partie centrale de la traverse en direction de la zone d'accostage.

Ainsi, les flancs 11, 21 présentent au voisinage de chaque extrémité de la traverse une portion 110, 210 sensiblement planaire (les chants étant sensiblement droits dans cette portion) favorable à la solidarisation, entre les flancs de la traverse, d'une pièce d'ajustement en raideur de la traverse.

Une telle pièce d'ajustement est constituée, selon le mode de réalisation illustré par la figure 10, par un gousset 5 s'étendant entre un bras (longitudinal 20 et la traverse 10.

Un tel gousset est soudé au bras 20 d'une part et, d'autre part, à la traverse 10 par l'intermédiaire de deux branches 51 ménageant entre elles un passage pour une barre anti-dévers 6 placée à l'intérieur de la traverse.

Les deux branches 51 assurent ainsi une transition entre la traverse et le bras en réduisant progressivement l'effet du gauchissement de la traverse, cet effet étant autorisé au niveau des branches (présentant entre elles un degré de liberté) et bloqué au niveau de la partie du gousset d'un seul tenant qui accoste le bras.

Par ailleurs, un gousset selon le présent mode de réalisation s'étend selon deux plans : un premier plan sensiblement horizontal dans lequel s'étend une surface d'accostage 52 dont l'extrémité est soudée à un bras longitudinal (les bords latéraux de cette surface étant de plus soudés aux flancs de la traverse), et un deuxième plan dans lequel s'étendent les branches 51, celles-ci « plongeant » à partir de la surface d'accostage 52, vers l'intérieur de la traverse 10 (les branches 51 étant également soudées sur les flancs de la traverse).

On note que, selon un autre mode de réalisation envisageable, et notamment en l'absence d'éléments d'ajustement en raideur tels que mentionnés précédemment, les chants de la traverse pourront présenter une forme en arc-de-cercle.

En référence aux figures 7a et 7b, la traverse présente de plus une section évolutive qui comprend la forme d'un V en partie centrale (figure 7a) de la traverse pour évoluer vers une forme trapézoïdale en allant sur les extrémités (figure 7b) de la traverse.

Ceci se traduit par la présence d'un plat 3 sur le sommet de la traverse, ce plat tendant à s'élargir en direction des extrémités de la traverse.

En référence à la figure 9, le plat 3 se prolonge à chaque extrémité de la traverse de façon à former une patte 31. Cette patte constitue une portion de solidarisation de la traverse aux bras longitudinaux.

Selon le mode de réalisation illustré par la figure 9, la traverse présente à chacune de ses extrémités des zones d'accostage 4 formées selon le présent mode de réalisation par des découpes prévues dans les flancs de façon à épouser la forme des bras.

La traverse étant montée sur le bras de façon que sa section soit ouverte vers le bas, les bras viennent se loger dans les découpes 4, puis une soudure est réalisée à l'interface entre les découpes 4 des flancs et les bras correspondants 20.

En outre, la patte 31 vient en contact avec la partie supérieure du bras 20, une soudure étant également réalisée à l'interface entre la patte 31 et le bras 20.

## Revendications

1. Essieu souple de véhicule automobile, comprenant deux bras longitudinaux (20) reliés par une traverse (10) à section ouverte dont les flancs (11), (21) présentent chacun un chant (1), (2) s'étendant entre des zones d'accostage (4) aux extrémités de ladite traverse (10),
lesdits chants (1), (2) présentant une forme non rectiligne favorisant leur mise en tension lors d'une torsion de ladite traverse (10), **caractérisé en ce que** ladite mise en tension est de nature à soulager lesdites zones d'accostage (4) des contraintes dues à ladite torsion, ladite traverse (10) présentant, au moins sur une partie de sa longueur, un plat (3) sensiblement horizontal reliant lesdits flancs (11), (21), ladite traverse (10) présentant dans ladite zone centrale une section en forme de V qui évolue de façon que ladite traverse présente a chacune de ses extrémités une section essentiellement trapézoïdale.

2. Essieu souple selon la revendication 1, **caractérisé en ce que** lesdits chants (1), (2) présentent entre eux, à partir d'une zone sensiblement centrale de ladite traverse (10), un écartement progressif en direction desdites zone d'accostage (4).

3. Essieu souple selon la revendication 2, **caractérisé en ce que** ledit écartement progressif est croissant à partir de ladite zone centrale en direction desdites zones d'accostage (4).

4. Essieu souple selon l'une des revendications 1 à 3, **caractérisé en ce que** chacun desdits chants (1), (2) présente une forme galbée dont le rayon de courbure croit de ladite partie centrale en direction desdites zones d'accostage (4).

5. Essieu souple selon l'une quelconque des revendications 1 à 3, caractérisé en cc que chacun desdits chants (1), (2) présente une forme en arc-de-cercle.

6. Essieu souple selon l'une quelconque des revendications 1 à 5, caractérisé en cc que ladite traverse (10) est solidarisée auxdits bras (20) de façon à présenter ladite section ouverte vers le bas.

7. Essieu souple selon l'une des revendications 1 à 6, **caractérisé en ce que** ledit plat (3) se prolonge à chacune desdites extrémités de ladite traverse de façon à présenter une portion de solidarisation (31) avec lesdits bras longitudinaux (20).

8. Essieu souple selon la revendication 7, caractérisé en cc que ledit plat (3) est soudé a chacune desdites extrémités de ladite traverse (10) sur ledit bras longitudinal correspondant (20).

9. Essieu souple selon les revendications 7 et 8, **caractérisé en ce qu'**il comprend au moins une pièce d'ajustement (5) en raideur rapportée entre lesdits flancs (11), (21), an voisinage de chacune des extrémités de ladite traverse (10).

10. Essieu souple selon les revendications 4 et 9, **caractérisé en ce que** lesdits chants (1), (2) présentent au voisinage de chacune desdites extrémités de ladite traverse une portion sensiblement droite (110), (210), lesdites pièces d'ajustement (5) en raideur étant rapportées entre lesdits flancs (11), (21) an niveau desdites portions sensiblement droites (110), (210) desdits chants.

## Claims

1. Flexible axle for a motor vehicle, comprising two longitudinal arms (20) connected by an open-section crossbrace (10) the flanks (11), (21) of which each have an edge (1), (2) running between abutment regions (4) situated at the ends of said crossbrace (10), said edges (1), (2) having a non-rectilinear shape encouraging them to be tensioned when said crossbrace (10) is subjected to torsion, **characterized in that** said tensioning is intended to relieve said abutment regions (4) of the stresses due to said torsion, said crossbrace (10) having, over at least part of its length, a substantially horizontal flat (3) connecting said flanks (11), (21), said crossbrace (10) having, in said central region, a V-shaped cross section which evolves in such a way that said crossbrace has an essentially trapezoidal cross section at each of its ends.

2. Flexible axle according to Claim 1, **characterized in that** said edges (1), (2) starting from a substantially central region of said crossbrace (10) progressively diverge from one another toward said abutment regions (4).

3. Flexible axle according to Claim 2, **characterized in that** said progressive divergence increases from said central region toward said abutment regions (4).

4. Flexible axle according to one of Claims 1 to 3, **characterized in that** each of said edges (1), (2) has a curved shape the radius of curvature of which increases from said central part toward said abutment regions (4).

5. Flexible axle according to any one of Claims 1 to 3, **characterized in that** each of said edges (1), (2) is in the form of an arc of a circle.

6. Flexible axle according to any one of Claims 1 to 5, **characterized in that** said crossbrace (10) is secured to said arms (20) in such a way that said open section faces downward.

7. Flexible axle according to one of Claims 1 to 6, **characterized in that** said flat (3) is extended at each of said ends of said crossbrace in such a way as to exhibit a securing portion (31) for securing to said longitudinal arms (20).

8. Flexible axle according to Claim 7, **characterized in that** said flat (3) is welded, at each of said ends of said crossbrace (10), to said corresponding longitudinal arm (20).

9. Flexible axle according to Claims 7 and 8, **characterized in that** it comprises at least one stiffness-adjusting piece (5) attached between said flanks (11), (21) near each of the ends of said crossbrace (10).

10. Flexible axle according to Claims 4 and 9, **characterized in that** said edges (1), (2) have, near each of said ends of said crossbrace, a substantially straight portion (110), (210), said stiffness-adjusting pieces (5) being attached between said flanks (11), (21) at said substantially straight portions (110), (210) of said edges.

## Patentansprüche

1. Flexible Achse eines Kraftfahrzeugs, die zwei Längsarme (20) enthält, welche durch einen Querträger (10) mit offenem Querschnitt verbunden sind, dessen Flanken (11), (21) je eine Schmalseite (1), (2) aufweisen, die sich zwischen Anlegezonen (4) an den Enden des Querträgers (10) erstrecken,
wobei die Schmalseiten (1), (2) eine nichtgeradlinige Form haben, die ihre Spannung bei einer Verwindung des Querträgers (10) begünstigen, **dadurch gekennzeichnet, dass** die Spannung von der Art ist, die Anlegezonen (4) von den Beanspruchungen aufgrund der Verwindung zu entlasten, wobei der Querträger (10) zumindest über einen Teil seiner Länge eine im Wesentlichen waagrechte Abflachung (3) aufweist, die die Flanken (11), (21) verbindet, wobei der Querträger (10) in der zentralen Zone einen V-förmigen Querschnitt aufweist, der sich so entwickelt, dass der Querträger an jedem seiner Enden einen im Wesentlichen trapezförmigen Querschnitt aufweist.

2. Flexible Achse nach Anspruch 1, **dadurch gekennzeichnet, dass** die Schmalseiten (1), (2) zwischen sich ausgehend von einer im Wesentlichen zentralen Zone des Querträgers (10) einen progressiven Abstand in Richtung der Anlegezonen (4) haben.

3. Flexible Achse nach Anspruch 2, **dadurch gekennzeichnet, dass** der progressive Abstand ausgehend von der zentralen Zone in Richtung der Anlegezonen (4) zunimmt.

4. Flexible Achse nach einem der Ansprüche 1 bis 3, **dadurch gekennzeichnet, dass** jede der Schmalseiten (1), (2) eine gewölbte Form aufweist, deren Krümmungsradius vom zentralen Bereich in Richtung der Anlegezonen (4) zunimmt.

5. Flexible Achse nach einem der Ansprüche 1 bis 3, **dadurch gekennzeichnet, dass** jede der Schmalseiten (1), (2) eine Kreisbogenform aufweist.

6. Flexible Achse nach einem der Ansprüche 1 bis 5, **dadurch gekennzeichnet, dass** der Querträger (10) so mit den Armen (20) fest verbunden ist, dass er den offenen Querschnitt nach unten aufweist.

7. Flexible Achse nach einem der Ansprüche 1 bis 6, **dadurch gekennzeichnet, dass** die Abflachung (3) sich an jedem der Enden des Querträgers so verlängert, dass sie einen Teil (31) fester Verbindung mit den Längsarmen (20) hat.

8. Flexible Achse nach Anspruch 7, **dadurch gekennzeichnet, dass** die Abflachung (3) an jedem der Enden des Querträgers (10) an den entsprechenden Längsarm (20) geschweißt ist.

9. Flexible Achse nach den Ansprüchen 7 und 8, **dadurch gekennzeichnet, dass** sie mindestens ein Steifheitsanpassungsbauteil (5) enthält, das zwischen den Flanken (11), (21) in der Nähe jedes der Enden des Querträgers (10) angefügt ist.

10. Flexible Achse nach den Ansprüchen 4 und 9, **dadurch gekennzeichnet, dass** die Schmalseiten (1), (2) in der Nähe jedes der Enden des Querträgers einen im Wesentlichen geraden Teil (110), (210) aufweisen, wobei die Steifheitsanpassungsbauteile (5) zwischen den Flanken (11), (21) im Bereich der im Wesentlichen geraden Teile (110), (210) der Schmalseiten angefügt sind.
